# EUROPEAN PATENT APPLICATION

(11) **EP 3 699 975 A1**
(43) Date of publication of application: **26.08.2020**
(21) Application number: 19879523.9
(22) Date of filing: 01.11.2019
(51) Int. Cl.: H01M 2/02, H01M 2/36

(54) **POUCH-TYPE SECONDARY BATTERY HAVING ELECTROLYTE SUPPLEMENT GROOVE**

(30) Priority: 02.11.2018 KR 20180133825
(71) Applicant: LG CHEM, LTD., Yeongdeungpo-gu, Seoul 07336 (KR)
(72) Inventor: HAN, Hyun Gyu, Daejeon 34122 (KR); JEON, Ho Jin, Daejeon 34122 (KR)
(74) Representative: Plasseraud IP
(86) International application number: PCT/KR2019/014657
(87) International publication number: WO 2020/091487

(57) **Abstract**

Disclosed is a pouch-type secondary battery including an electrode assembly having a structure in which a separator is interposed between a positive electrode and a negative electrode and a battery case including a first recess portion configured to receive the electrode assembly and a second recess portion configured to receive a supplementary electrolytic solution, wherein the second recess portion is located at at least one side of the first recess portion, and a sealing line configured to prevent movement of the electrolytic solution received in the second recess portion is formed between the first recess portion and the second recess portion.

## Description

### [Technical Field]

This application claims the benefit of priority to Korean Patent Application No. 2018-0133825 filed on November 2, 2018, the disclosure of which is hereby incorporated by reference herein its entirety.

The present invention relates to a pouch-type secondary battery having an electrolytic solution supplement recess portion formed therein, and more particularly to a pouch-type secondary battery including a battery case having formed therein a separate recess portion configured to receive a supplementary electrolytic solution in order to supplement an electrolytic solution that is exhausted during use of the secondary battery, wherein the supplementary electrolytic solution moves to an electrode assembly receiving portion when a weakly coupled sealing line is opened.

### [Background Art]

A battery that is capable of being charged and discharged, unlike a primary battery, which cannot be recharged, is called a secondary battery, which is widely used in automation systems, electric vehicles, and aviation industries as well as portable electronic devices, such as mobile phones, laptop computers, and tablet PCs.

Conventionally, a nickel-based secondary battery, such as a nickel-cadmium battery or a nickel-hydride battery, was used as the secondary battery. However, a lithium secondary battery, which has high operating voltage, a capacity equivalent to about three times the capacity of the nickel-based secondary battery, and high energy density per unit weight, has been rapidly increasingly used.

The lithium secondary battery includes an electrode assembly configured such that a positive electrode plate, to which a positive electrode active material is applied, and a negative electrode plate, to which a negative electrode active material is applied, are disposed in the state in which a separator is disposed therebetween, a sheathing case configured to receive the electrode assembly, and an electrolytic solution, with which the electrode assembly is impregnated.

Based on the shape of the sheathing case, the lithium secondary battery may be classified as a can-shaped secondary battery, in which the electrode assembly is mounted in a metal can, or a pouch-type secondary battery, in which the electrode assembly is mounted in a pouch case made of a metal laminate sheet. In recent years, the pouch-type secondary battery has been highlighted as a power source for electric vehicles or hybrid vehicles, since the pouch-type secondary battery has advantages in that manufacturing cost is low, energy density is high, and it is easy to constitute a large-capacity battery pack through series or parallel connection of pouch-type secondary batteries.

In general, the electrolytic solution is decomposed in the lithium secondary battery as side reaction during charging of the lithium secondary battery, whereby gas is generated in the lithium secondary battery. In addition, the electrolytic solution may be denaturalized due to repeated charging and discharging of the lithium secondary battery. The amount of the electrolytic solution capable of contributing to electrochemical reaction is reduced over time due to decomposition or denaturalization of the electrolytic solution, whereby the charge and discharge efficiency and the capacity retention ratio of the lithium secondary battery are reduced. As a result, it is necessary to replace the lithium secondary battery with a new one.

In order to solve the above problems, Patent Document 1 discloses a lithium secondary battery including a case including a main chamber configured to receive an electrode assembly and an electrolytic solution and a sub chamber configured to receive a supplementary electrolytic solution to be used in the case in which the electrolytic solution in the main chamber is consumed, and a connection unit configured to allow the main chamber and the sub chamber to communicate with each other, wherein the supplementary electrolytic solution received in the sub chamber can move to the main chamber via the connection unit.

However, Patent Document 1 is configured to have a structure in which the connection unit is opened and closed in order to move the electrolytic solution received in the sub chamber to the main chamber in proportion to the amount of the electrolytic solution that is consumed when the electrolytic solution in the main chamber is consumed.

Patent Document 2 discloses a secondary battery including a pouch-type main pocket including an electrode assembly, in which two or more unit cells are stacked and which is filled with an electrolytic solution; a pouch-type auxiliary pocket attached to any one of the outer surfaces of the main pocket and containing a supplementary electrolytic solution; an electrolytic solution movement unit located between the main pocket and the auxiliary pocket, the electrolytic solution movement unit being configured to provide a path along which the supplementary electrolytic solution moves to the main pocket; and a pack case configured to receive a unit set constituted by the main pocket, the auxiliary pocket, and the electrolytic solution movement unit, the pack case having an inner wall configured to come into contact with the outer surface of the auxiliary pocket when the main pocket swells.

However, Patent Document 2 is configured to have a structure in which the auxiliary pocket is attached to the outer surface of the main pocket, whereby the thickness of the secondary battery is increased. In addition, the swelling main pocket applies pressure to the auxiliary pocket such that the auxiliary pocket comes into tight contact with the pack case, and the pressurized auxiliary pocket discharges the supplementary electrolytic solution to the main pocket through the electrolytic solution movement unit. To this end, a unidirectional valve structure or a membrane-type valve structure is used.

Patent Document 3 discloses a secondary battery capable of automatically supplying a supplementary liquid, the secondary battery including a main cell including a positive electrode and a negative electrode, the main cell being configured to receive an electrolytic solution; an auxiliary cell connected to the main cell; a case configured to receive the main cell and the auxiliary cell; a vent configured to allow the main cell to communicate with the air; a gas movement unit configured to equalize pressures of the main cell and the auxiliary cell; and a supplementary liquid movement unit configured to move a supplementary liquid in the auxiliary cell to the main cell at a specific pressure value or higher.

Patent Document 3 is configured to have a structure in which the supplementary liquid moves to the main cell through a supplementary liquid movement path when the pressure in the main cell reaches about 70 % to 99 % of the minimum open pressure of a vent and in which the vent is opened when the pressure in the main cell exceeds the minimum open pressure of the vent, whereby gas is discharged outside.

That is, the secondary battery of Patent Document 3 is configured to have a structure including a vent.

Therefore, there is high necessity for a pouch-type secondary battery capable of supplementing an electrolytic solution exhausted during use of the lithium secondary battery, wherein the pouch-type secondary battery is capable of adjusting a time at which the electrolytic solution is to be supplemented without increasing the thickness of a battery cell and including a separate member.

### (Prior Art Document)

### (Patent Document)

Korean Patent Application Publication No. 2016-0032482 (2016.03.24)
Korean Patent Application Publication No. 2013-0038655 (2013.04.18)
Korean Patent Application Publication No. 2010-0051403 (2010.05.17)

### [Disclosure]

### [Technical Problem]

The present invention has been made in view of the above problems, and it is an object of the present invention to provide a pouch-type secondary battery including a supplementary electrolytic solution receiving portion configured to supplement an electrolytic solution that is exhausted while maintaining the thickness of a battery cell without adding a separate member.

### [Technical Solution]

A first embodiment of the present invention provided to accomplish the above object may be a pouch-type secondary battery including an electrode assembly having a structure in which a separator is interposed between a positive electrode and a negative electrode, and a battery case including a first recess portion configured to receive the electrode assembly and a second recess portion configured to receive a supplementary electrolytic solution, wherein the second recess portion may be located at at least one side of the first recess portion, and a sealing line configured to prevent movement of the electrolytic solution received in the second recess portion may be formed between the first recess portion and the second recess portion.

A second embodiment may be a pouch-type secondary battery configured such that the depth of the second recess portion has a size equal to or smaller than the depth of the first recess portion.

A third embodiment may be a pouch-type secondary battery configured such that the supplementary electrolytic solution moves to the first recess portion when the sealing line is opened.

A fourth embodiment may be a pouch-type secondary battery configured such that the sealing states of edge sealing portions of the battery case are maintained when the sealing line is opened.

A fifth embodiment may be a pouch-type secondary battery configured such that the battery case is provided at edges thereof with a first-direction sealing portion parallel to a first-direction edge of the battery case at which an electrode tab is located and a second-direction sealing portion perpendicular to the first-direction sealing portion and such that the second recess portion is located between the second-direction sealing portion and the first recess portion.

A sixth embodiment may be a pouch-type secondary battery configured such that the battery case is provided at edges thereof with a first-direction sealing portion parallel to a first-direction edge of the battery case at which an electrode tab is located and a second-direction sealing portion perpendicular to the first-direction sealing portion and such that the second recess portion is located between the first-direction sealing portion and the first recess portion.

A method of manufacturing the pouch-type secondary battery may include a step of forming a first recess portion and a second recess portion in a battery case sheet using a first punch and a second punch; a first sealing step of sealing first-direction sealing portions located at opposite sides and a second-direction sealing portion located at one side, except for a second-direction sealing portion located at the other side which is oriented in a direction in which an electrolytic solution is injected; a step of injecting an electrolytic solution into the first recess portion; a step of injecting an electrolytic solution into the second recess portion; a second sealing step of forming a sealing line between the first recess portion and the second recess portion; and a third sealing step of temporarily sealing the second-direction sealing portion at the other side which is oriented in the direction in which the electrolytic solution is injected.

Specifically, a seventh embodiment of the method of manufacturing the pouch-type secondary battery may include (a-1) a step of forming a first recess portion and a second recess portion; (a-2) a first sealing step; (a-3) a step of injecting an electrolytic solution into the first recess portion; (a-4) a third sealing step; (a-5) a second sealing step; and (a-6) a step of injecting an electrolytic solution into the second recess portion, wherein a fourth sealing step of cutting a second-direction sealing portion temporarily sealed at the third sealing step, injecting an electrolytic solution into the second recess portion, and forming a second-direction sealing portion oriented in the direction in which the electrolytic solution is injected may be performed after the second sealing step.

An eighth embodiment of the method of manufacturing the pouch-type secondary battery may include (b-1) a step of forming a first recess portion and a second recess portion; (b-2) a first sealing step; (b-3) a second sealing step; (b-4) a step of injecting an electrolytic solution into the first recess portion and the second recess portion; and (b-5) a third sealing step, wherein the third sealing step may include performing third sealing for temporary sealing after the step (b-4), performing an activation process and a degassing process, performing fourth sealing so as to be adjacent to at least one of the first recess portion and the second recess portion, and removing the temporarily sealed portion by cutting.

In a ninth embodiment, the first sealing step and the second sealing step may be simultaneously performed.

In a tenth embodiment, the second recess portion may be located between the second-direction sealing portion and the first recess portion.

In addition, in an eleventh embodiment, the second-direction length of the second recess portion may be formed so as to be shorter than the second-direction length of the first recess portion.

In a twelfth embodiment, the second recess portion may be located between the first-direction sealing portion and the first recess portion.

In addition, in a thirteenth embodiment, the method may further include a process of bending the second-direction sealing portion.

A fourteenth embodiment may be a battery pack including the pouch-type secondary battery, wherein the pouch-type secondary battery may be stacked in the state in which a second recess portion is disposed above a first recess portion such that a supplementary electrolytic solution in the second recess portion flows into the first recess portion.

### [Description of Drawings]

FIG. 1 is a plan view showing a pouch-type secondary battery having formed therein a single second recess portion according to an embodiment of the present invention.
FIG. 2 is a front view of FIG. 1.
FIG. 3 shows a method of manufacturing a pouch-type secondary battery having the same structure as shown in FIGS. 1 and 2.
FIG. 4 is a plan view showing a pouch-type secondary battery having two second recess portions formed therein.
FIG. 5 is a plan view showing a pouch-type secondary battery configured such that the second-direction length of a first recess portion is formed so as to be longer than the second-direction length of a second recess portion.
FIG. 6 shows a method of manufacturing the pouch-type secondary battery of FIG. 5.
FIG. 7 is a plan view showing a pouch-type secondary battery configured to have a structure in which a second recess portion is located between a first-direction sealing portion and a first recess portion.
FIG. 8 shows a method of manufacturing the pouch-type secondary battery of FIG. 7.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A pouch-type secondary battery according to the present invention may include an electrode assembly having a structure in which a separator is interposed between a positive electrode and a negative electrode and a battery case including a first recess portion configured to receive the electrode assembly and a second recess portion configured to receive a supplementary electrolytic solution, wherein the second recess portion is located at at least one side of the first recess portion, and a sealing line configured to prevent movement of the electrolytic solution received in the second recess portion may be formed between the first recess portion and the second recess portion.

The second recess portion may be formed in at least one of the upper edge, the lower edge, the left edge, and the right edge of the first recess portion configured to receive the electrode assembly, and two or more second recess portions may be formed at one of the edges of the first recess portion.

The sealing line may be formed using the same method as a method of sealing the battery case; however, sealing force of the sealing line may be formed so as to be lower than sealing forces of edge sealing portions of the battery case.

As the pouch-type secondary battery is repeatedly charged and discharged, gas is generated in the pouch-type secondary battery, whereby the battery case swells. The weakly sealed sealing line may be open due to swelling of the battery case, and the supplementary electrolytic solution received in the second recess portion may move to the first recess portion as the result of opening of the sealing line.

In the present invention, it is possible to supplement the electrolytic solution exhausted in the first recess portion, as described above, whereby it is possible to prevent an increase in resistance of the electrode assembly due to reduction of the electrolytic solution and to solve problems in that the capacity retention ratio and the charge and discharge efficiency of the secondary battery are reduced.

A time at which the sealing line is opened may be set based on the capacity of the secondary battery and characteristics of materials, such as the electrolytic solution and active materials. For example, a narrow sealing tool may be used in order to reduce contact area between an upper case and a lower case, or a sealing tool having a curved sealing surface may be used. A method of using the sealing tool at a temperature lower than a sealing temperature of the edge sealing portions of the battery case or reducing pressing force of the sealing tool may be used as another method.

Meanwhile, when the sealing line is opened as the battery case swells due to an increase in the amount of gas in the battery case, the supplementary electrolytic solution received in the second recess portion may move to the first recess portion, and the gas in the battery may move to the second recess portion, whereby it is possible to alleviate an increase in the inner pressure of the battery case.

When the sealing line is opened, as described above, the inner pressure of the battery case becomes lower than the inner pressure of the battery case before the sealing line is opened, whereby the edge sealing portions of the battery case may not be vented, and therefore sealing may be maintained

The battery case may be a laminate sheet configured to have a structure in which an outer resin layer, an air and moisture blocking metal layer, and a thermally fusible inner resin layer are stacked.

It is required for the outer resin layer to exhibit tolerance to the external environment, and therefore excellent tensile strength and weather resistance are necessary. In this aspect, a polyester-based resin, such as polyethylene naphthalate (PEN), polyethylene terephthalate (PET), or polybutylene terephthalate (PBT); a polyolefin-based resin, such as polyethylene (PE) or polypropylene (PP); a polystyrene-based resin, such as polystyrene; a polyvinyl chloride-based resin; or a polyvinylidene chloride-based resin may be used as a polymer resin constituting the outer coating layer. The above material may be used either alone or as a mixture of two or more materials, and an oriented nylon film (ONy) is widely used.

The metal layer may be made of aluminum (Al), an aluminum alloy, copper, a copper alloy, or stainless steel in order to exhibit a function of improving strength of the battery case in addition to a function of preventing introduction of foreign matter, such as gas and moisture, or leakage of the electrolytic solution. Examples of the aluminum alloy may include alloy numbers 8079, 1N30, 8021, 3003, 3004, 3005, 3104, and 3105.

A single material or a combination of two or more materials may be used as the metal layer. In the case in which the metal layer is made of a combination of two or more materials, the metal layer may be configured to have a multilayered structure, or may be configured such that different materials are partially applied.

Stainless steel is a material exhibiting higher strength than aluminum. In the case in which stainless steel is used as the metal layer, therefore, it is possible to improve formability of the battery case.

Consequently, it is possible to prevent cracks from being generated during formation of the electrode assembly receiving portion and to form the battery case such that the depth of the electrode assembly receiving portion is relatively large, compared to a battery case including an aluminum layer.

In addition, in the case in which stainless steel is used as the metal layer of the battery case, it is possible to form a metal layer having a relatively smaller thickness than aluminum. Consequently, the thickness of the battery case may be reduced, whereby it is possible to manufacture a secondary battery having an increased ratio of capacity to volume.

Copper is a metal exhibiting high thermal conductivity. In the case in which the metal layer of the battery case includes a copper material, therefore, it is possible to obtain the effect of improving heat dissipation.

A polymer resin that exhibits thermal fusibility (thermal adhesiveness), has low hygroscopicity to the electrolytic solution in order to inhibit permeation of the electrolytic solution, and is not expanded or eroded by the electrolytic solution may be used as the inner resin layer. More preferably, the inner resin layer is made of cast polypropylene (CPP).

In a preferred example, the battery case according to the present invention may be configured to have a structure in which the thickness of the outer coating layer is 5 µm to 40 µm, the thickness of the metal layer is 20 µm to 150 µm, and the thickness of the inner resin layer is 10 µm to 50 µm. In the case in which the thickness of each layer of the battery case is too small, it is difficult to expect a material blocking function and strength improvement, which is undesirable. On the other hand, in the case in which the thickness of each layer of the battery case is too large, formability is reduced and an increase in the thickness of the sheet is caused, which is undesirable.

The depth and the width of the second recess portion may be set based on the amount of a supplementary electrolytic solution that is needed. For example, the depth of the second recess portion may be formed so as to have a size equal to or smaller than the depth of the first recess portion. Specifically, the depth of the second recess portion may be formed so as to be equivalent to 50 % to 100 % of the depth of the first recess portion. More specifically, the depth of the first recess portion and the depth of the second recess portion may be formed so as to be equal to each other.

In the case in which the depth of the second recess portion is less than 50 % of the depth of the first recess portion, the width of the second recess portion may be relatively increased in order to secure the amount of the supplementary electrolytic solution to a certain extent, whereby the overall planar size of the battery cell may be increased, which is undesirable. In the case in which the depth of the second recess portion is greater than 100 % of the depth of the first recess portion, the thickness of the battery cell may be increased, which is undesirable.

In a concrete example, the battery case may be provided at edges thereof with a first-direction sealing portion parallel to a first-direction edge of the battery case at which electrode tabs are located and a second-direction sealing portion perpendicular to the first-direction sealing portion, and the second recess portion may be located between the second-direction sealing portion and the first recess portion.

Specifically, the electrode assembly may be a unidirectional electrode assembly having a structure in which positive electrode tabs and negative electrode tabs protrude in one direction or a bidirectional electrode assembly having a structure in which positive electrode tabs and negative electrode tabs protrude in opposite directions.

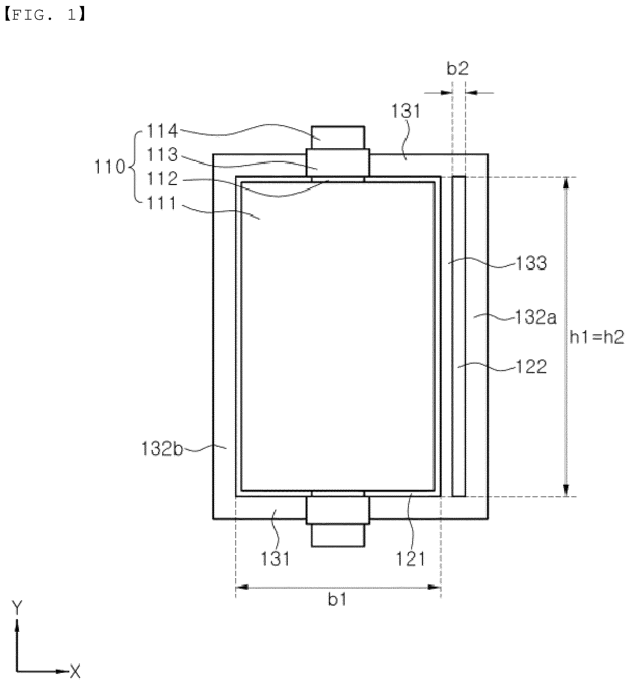

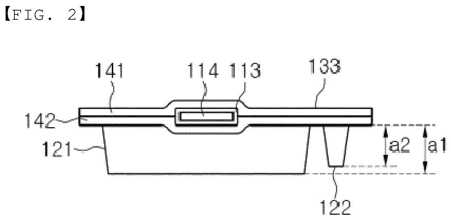

In connection therewith, FIG. 1 is a plan view showing a pouch-type secondary battery having formed therein a single second recess portion according to an embodiment of the present invention, and FIG. 2 is a front view of FIG. 1.

Referring to FIGS. 1 and 2, the pouch-type secondary battery includes a first recess portion 121 configured to receive an electrode assembly 110 and a second recess portion 122 configured to receive a supplementary electrolytic solution.

In the electrode assembly 110, which is a bidirectional electrode assembly, electrode tabs 112 are formed at electrode plates 111 so as to protrude in opposite directions, and sealing tapes 113 are attached to the surfaces of electrode tabs 112 that are located at sealing portions of a battery case in order to increase sealing force.

Electrode leads 114 are coupled to outer ends of the electrode tabs 112, and the electrode leads 114 extend out of the battery case so as to function as electrode terminals.

First-direction sealing portions 131 are formed at first-direction (x) edges of the battery case at which the protruding electrode tabs 112 are located, and second-direction sealing portions are formed in a second direction y, which is perpendicular to the first-direction sealing portions 131.

The second-direction sealing portions include a right second-direction sealing portion 132a and a left second-direction sealing portion 132b.

A sealing line 133 is formed between the first recess portion 121 and the second recess portion 122, and is sealed such that the force of coupling between an upper case 141 and a lower case 142 configured to form the sealing line 133 is lower than the force of coupling between the upper case 141 and the lower case 142 configured to form the first-direction sealing portions 131, the right second-direction sealing portion 132a, and the left second-direction sealing portion 132b.

The second recess portion 122 is formed between the sealing line 133 and the right second-direction sealing portion 132a.

When the sealing line 133 is opened as the result of an increase in the inner pressure of the battery case due to an increase in the amount of gas in the battery case, the supplementary electrolytic solution received in the second recess portion 122 may move to the first recess portion 121.

The second-direction (y) length h1 of the first recess portion 121 and the second-direction (y) length h2 of the second recess portion 122 may be formed so as to be equal to each other, and the depth a2 of the second recess portion may be formed so as to be 50% to 100% of the depth a1 of the first recess portion or to be equal thereto.

Of course, the vertical section of each of the first recess portion and the second recess portion may be independently formed so as to have a rectangular shape or to have a shape in which lower corners are round, although shown as having a trapezoidal shape in FIG. 2.

In the case in which the amount of the supplementary electrolytic solution received in the second recess portion is included so as to account for 10% to 20% of the total amount of the electrolytic solution injected into the first recess portion, it is possible to obtain the effect of increasing lifespan of the pouch-type secondary battery to a desired extent. Consequently, the width b2 of the second recess portion may be set within an appropriate range in consideration of an increment in the first-direction length of a battery cell, the depth a2 of the second recess portion, and the amount of the electrolytic solution that is supplemented. For example, in the case in which the vertical section of each of the first recess portion and the second recess portion is formed so as to have a trapezoidal shape, as shown in FIG. 2, the width b2 of the second recess portion may be formed so as to be within a range of 5% to 15% of the width b1 of the first recess portion based on a sealing surface at which the upper case and the lower case are adhered to each other. Specifically, in the case in which the width of the first recess portion is 150 mm, the width of the first recess portion may be formed so as to be 10 mm to 20 mm.

A method of manufacturing a pouch-type secondary battery according to the present invention may include a step of forming a first recess portion and a second recess portion in a battery case sheet using a first punch and a second punch; a first sealing step of sealing first-direction sealing portions located at opposite sides and a second-direction sealing portion located at one side, except for a second-direction sealing portion located at the other side which is oriented in a direction in which an electrolytic solution is injected (hereinafter referred to as a "first sealing step"); a step of injecting an electrolytic solution into the first recess portion; a step of injecting an electrolytic solution into the second recess portion; a second sealing step of forming a sealing line between the first recess portion and the second recess portion (hereinafter referred to as a "second sealing step"); and a third sealing step of temporarily sealing the second-direction sealing portion at the other side which is oriented in the direction in which the electrolytic solution is injected (hereinafter referred to as a "third sealing step").

Specifically, an embodiment of a method of manufacturing a pouch-type secondary battery having the same structure as shown in FIGS. 1 and 2 may include (a-1) a step of forming a first recess portion and a second recess portion, (a-2) a first sealing step, (a-3) a step of injecting an electrolytic solution into the first recess portion, (a-4) a third sealing step, (a-5) a second sealing step, and (a-6) a step of injecting an electrolytic solution into the second recess portion, wherein a fourth sealing step of cutting a second-direction sealing portion temporarily sealed at the third sealing step, injecting an electrolytic solution into the second recess portion, and forming a second-direction sealing portion oriented in the direction in which the electrolytic solution is injected may be performed after the second sealing step.

That is, in the present invention, the second recess portion configured to receive a supplementary electrolytic solution is also formed in the battery case at the time of forming the first recess portion configured to receive an electrode assembly in the battery case. Specifically, the first recess portion and the second recess portion are formed by locating a battery case sheet on a die having formed therein recesses having the same sizes as the first recess portion and the second recess portion and pressing the battery case sheet using punches.

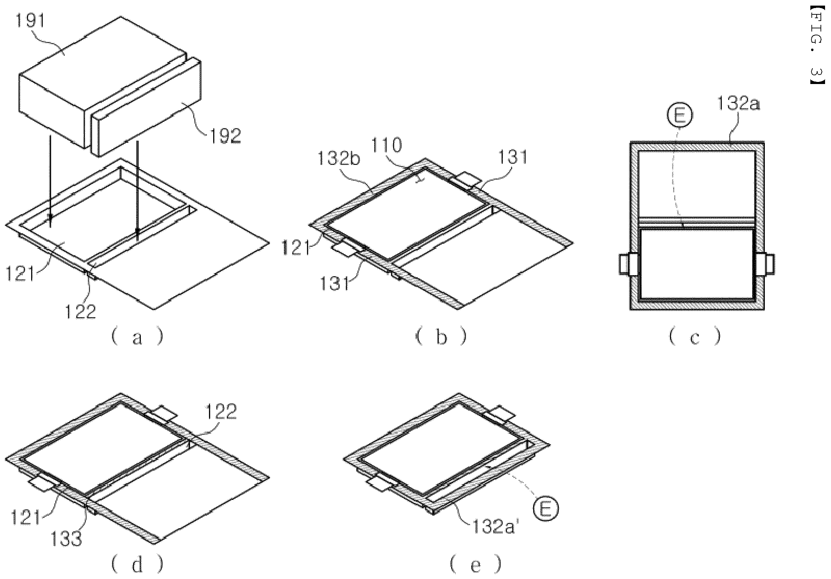

As an embodiment, a method of manufacturing a pouch-type secondary battery having the same structure as shown in FIGS. 1 and 2 is shown in FIG. 3. For convenience of understanding, an upper case is omitted from the pouch-type secondary battery of FIG. 3.

Referring to FIG. 3, a battery case sheet is pressed using a first punch 191 and a second punch 192 to form a first recess portion 121 and a second recess portion 122 (step (a)).

An electrode assembly 110 is received in the first recess portion 121, and then first sealing to seal first-direction sealing portions 131 located at the upper side and the lower side of the first recess portion 121 and to seal a left second-direction sealing portion 132b, which is a second-direction sealing portion located at one side, is performed (step (b)).

Subsequently, an electrolytic solution E is injected into the first recess portion 121, and then third sealing to temporarily seal a right second-direction sealing portion 132a is performed (step (c)). Specifically, injection of the electrolytic solution is performed through a predetermined portion for a second-direction sealing portion that has not been sealed at step (b), and the right second-direction sealing portion 132a is temporarily sealed in order to perform an activation process after injection of the electrolytic solution.

A degassing process of discharging gas generated during the activation process is performed, and then second sealing to form a sealing line 133 between the first recess portion 121 and the second recess portion 122 is performed (step (d)).

Sealing force of the sealing line 133 is formed so as to be lower than sealing forces of the first-direction sealing portions 131 and the left second-direction sealing portion 132b, and may be adjusted by narrowing the area of contact between the battery case and a sealing tool configured to form the sealing line, using a sealing tool having lower temperature, or setting pressing pressure of the sealing tool to a lower level.

Alternatively, as a method of setting the sealing force of the sealing line to a low level, the width of the sealing line may be formed so as to be narrower than the widths of the first-direction sealing portions and the second-direction sealing portions. In order to set the sealing force of the battery case so as to be uniform at all edges thereof, however, the widths of the first-direction sealing portions and the second-direction sealing portions of the battery case may be set to be equal to each other.

The right second-direction sealing portion 132a is cut in order to inject an electrolytic solution E into the second recess portion 122 (step (d)).

A supplementary electrolytic solution E is injected into the second portion 122, and then fourth sealing to form a right second-direction sealing portion 132a' is performed to completely seal the pouch-type secondary battery (step (e)).

In another concrete example, the second-direction sealing portions may include a right second-direction sealing portion and a left second-direction sealing portion, a right second recess portion may be formed between the right second-direction sealing portion and the first recess portion, and a left second recess portion may be formed between the left second-direction sealing portion and the first recess portion. Alternatively, of course, only the left second recess portion may be formed, unlike the pouch-type secondary battery of FIG. 1.

In the case in which two second recess portions are formed, as described above, the electrolytic solution may be supplemented in opposite directions of the electrode assembly, whereby the present invention has an advantage in that the impregnation rate of the electrolytic solution is uniform throughout the entirety of the electrode assembly, compared to the case in which the electrolytic solution is supplemented only in one direction of the electrode assembly.

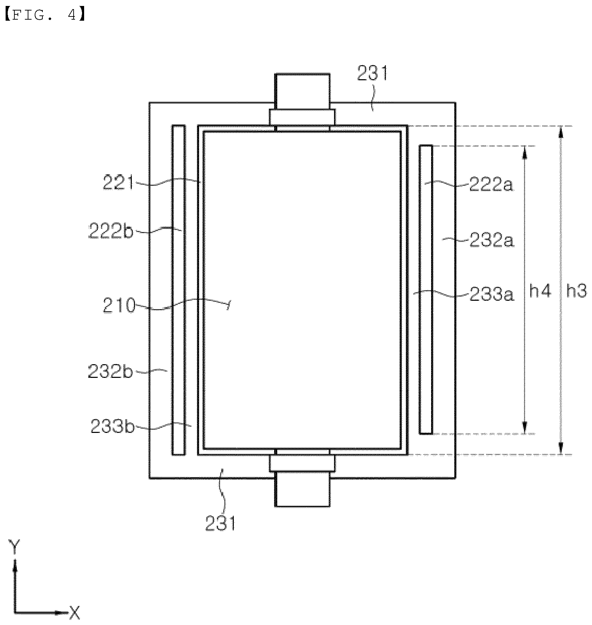

In connection therewith, FIG. 4 is a plan view showing a pouch-type secondary battery having two second recess portions formed therein.

Referring to FIG. 4, the pouch-type secondary battery is configured such that a bidirectional electrode assembly 210 is received in a first recess portion 221 and such that first-direction sealing portions 231 are formed at first-direction (x) edges of a battery case at which protruding electrode tabs are located. A right second-direction sealing portion 232a and a left second-direction sealing portion 232b are formed as second-direction sealing portions perpendicular to the first-direction sealing portion 231.

In addition, the pouch-type secondary battery of FIG. 4 includes two second recess portions, wherein a right second recess portion 222a is formed at the right side of the first recess portion 221 in the figure, and a left second recess portion 222b is formed at the left side of the first recess portion 221 in the figure. A sealing line 233a is formed between the first recess portion 221 and the right second recess portion 222a, and a sealing line 233b is formed between the first recess portion 221 and the left second recess portion 222b.

The second-direction (y) length of the left second recess portion 222b may be equal to or different from the second-direction (y) length of the right second recess portion 222a, and the second-direction (y) length h3 of the first recess portion 221 may be equal to or longer than the second-direction (y) length h4 of the left second recess portion 222b or the right second recess portion 222a.

Opening of the sealing line 233a and the sealing line 233b may be simultaneously performed. In order to further improve the lifespan of the battery, however, one of the sealing lines may be opened, and then the other sealing line may be opened after a predetermined time. In order to set the opening times of the sealing lines to be different from each other, as described above, the sealing forces of the respective sealing lines may be set to be different from each other.

As a method of manufacturing the pouch-type secondary battery using the bidirectional electrode assembly and having the two second recess portions formed therein, as shown in FIG. 4, the electrode assembly 210 is received in the first recess portion 221, the first-direction sealing portions 231, which are located at the upper part and the lower part of the first recess portion, at which electrode leads are located, and the left second-direction sealing portion 232b are sealed, and an electrolytic solution is injected in the direction of the right second-direction sealing portion 232a.

At this time, the amount of the electrolytic solution that is injected is slightly larger than the amount of the electrolytic solution that can be received in the left second recess portion 222b. The reason for this is that it is preferable to consider the amount of the electrolytic solution that remains in the first recess portion 221 while passing through the first recess portion 221 or is absorbed by the electrode assembly 210.

Subsequently, the sealing line 233b is formed, and then an electrolytic solution is injected into the first recess portion 221. Subsequent processes may be performed through the same processes as steps (c) to (e) of FIG. 3, as described above, and a duplicate description thereof will be omitted.

Meanwhile, in the case in which a unidirectional electrode assembly is used, unlike FIG. 4, an electrolytic solution may be injected through a first-direction sealing portion opposite to another first-direction sealing portion from which electrode tabs protrude. The first-direction sealing portion at which the protruding electrode tabs are located, the left second-direction sealing portion, and the right second-direction sealing portion may be sealed, and an electrolytic solution may be simultaneously injected into the first recess portion, the right second recess portion, and the left second recess portion in the state in which a predetermined portion for the first-direction sealing portion from which no electrode tabs protrude is located so as to face upwards. Subsequently, the first-direction sealing portion that has not yet been sealed is sealed, and then an activation process and a degassing process are performed.

In a concrete example, the second-direction length of the first recess portion may be formed so as to be longer than the second-direction length of the second recess portion, unlike the case in which the second-direction (y) lengths of the first recess portion and the second recess portion are formed so as to be equal to each other in the pouch-type secondary battery of FIG. 1.

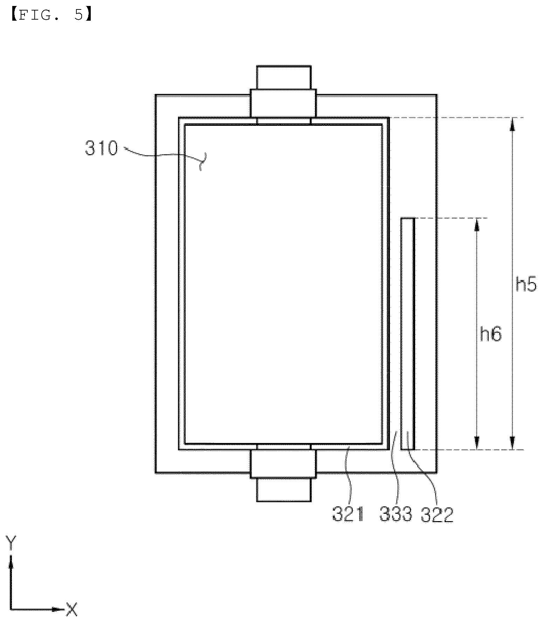

In connection therewith, FIG. 5 is a plan view showing a pouch-type secondary battery configured such that the second-direction length of a first recess portion is formed so as to be longer than the second-direction length of a second recess portion.

Referring to FIG. 5, the pouch-type secondary battery includes a first recess portion 321 configured to receive an electrode assembly 310 and a second recess portion 322 configured to receive a supplementary electrolytic solution.

The second-direction (y) length h6 of the second recess portion 322, which is located at the right side of the first recess portion 321, is formed so as to be shorter than the second-direction (y) length h5 of the first recess portion 321.

A method of manufacturing a pouch-type secondary battery having the second recess portion located between a second-direction sealing portion and a first recess portion, as described above, may include (b-1) a step of forming a first recess portion and a second recess portion, (b-2) a first sealing step, (b-3) a second sealing step, (b-4) a step of injecting an electrolytic solution into the first recess portion and the second recess portion, and (b-5) a third sealing step, wherein the third sealing step may be performed in the sequence of performing third sealing for temporary sealing after step (b-4), performing an activation process and a degassing process, performing fourth sealing so as to be adjacent to the second recess portion, and removing the temporarily sealed portion by cutting.

In addition, the second sealing is formed only between the first recess portion and the second recess portion, but is not formed at a portion adjacent to the first recess portion extending further than the second recess portion. The first sealing step and the second sealing step may be simultaneously performed.

In the case in which the second-direction length of the second recess portion is formed so as to be shorter than the second-direction length of the first recess portion, as described above, it is possible to simultaneously perform the injection of an electrolytic solution into the first recess portion and the second recess portion, whereby it is possible to simplify the manufacturing method.

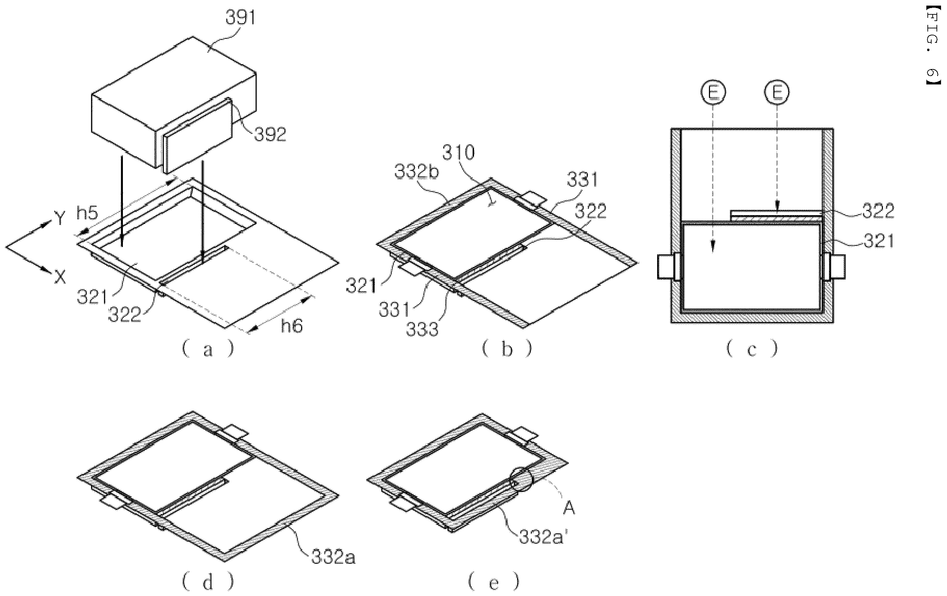

A concrete method of manufacturing the pouch-type secondary battery of FIG. 5 is shown in FIG. 6. For convenience of understanding, an upper case is omitted from the pouch-type secondary battery of FIG. 6.

Referring to FIG. 6, the second-direction (y) length h5 of the first recess portion 321 is formed so as to be longer than the second-direction (y) length h6 of the second recess portion 322. The second-direction (y) length of a first punch 391 configured to form the first recess portion is longer than the second-direction (y) length of a second punch 392 configured to form the second recess portion.

The first recess portion 321 and the second recess portion 322 are formed in a battery case sheet using the first punch 391 and the second punch 392, which have different sizes, as described above (step (a)).

The second-direction length of the second recess portion of the pouch-type secondary battery of FIG. 5 is formed so as to be shorter than the second-direction length h2 of the second recess portion of the pouch-type secondary battery of FIG. 1. In order to inject the same amount of a supplementary electrolytic solution, the width of the second recess portion may be further increased, or the depth of the second recess portion may be further increased.

An electrode assembly 310 is received in the first recess portion 321, first sealing to seal first-direction sealing portions 331 located at the upper side and the lower side of the first recess portion 321 and a left second-direction sealing portion 332b, which is a second-direction sealing portion located at one side, is performed, and second sealing to form a sealing line 333 between the first recess portion 321 and the second recess portion 322 is also performed (step (b)).

Sealing force of the first sealing is formed so as to be higher than sealing force of the second sealing. A sealing tool configured to perform the first sealing may be set so as to have larger contact area, higher sealing temperature, or higher pressing force and longer pressing time than a sealing tool configured to perform the second sealing.

That is, the first sealing and the second sealing may be simultaneously performed, but may be different from each other in terms of the kind of the sealing tools that are used, the sealing temperature, the pressing force, and the pressing time.

Injection of an electrolytic solution may be performed through a predetermined portion for a second-direction sealing portion that has not been sealed, and the electrolytic solution E may be simultaneously injected into the first recess portion 321 and the second recess portion 322, since the second-direction length h6 of the second recess portion 322 is shorter than the second-direction length h5 of the first recess portion 321 (step (c)).

Third sealing to temporarily seal a right second-direction sealing portion 332a that has not been sealed at step (b) is performed to seal the battery case, an activation process is performed, and a degassing process is performed in order to discharge gas generated during the activation process (step (d)).

Subsequently, fourth sealing to form a right second-direction sealing portion 332a' so as to be adjacent to the second recess portion is performed, and the right second-direction sealing portion 332a, which has been temporarily sealed at the previous step, is removed (step (e)).

In the above pouch-type secondary battery, the second-direction length of the second recess portion is formed so as to be shorter than the second-direction length of the first recess portion. In order to prevent outflow of the supplementary electrolytic solution from the second recess portion, the fourth sealing is preferably performed with respect to all of the contact surfaces between the upper case and the lower case, including an upper space A of the second recess portion.

In another concrete example, the pouch-type secondary battery may be configured to have a structure in which the second recess portion is located between one of the first-direction sealing portions and the first recess portion.

In general, the electrode assembly may be a unidirectional electrode assembly having a structure in which positive electrode tabs and negative electrode tabs protrude in the same direction or a bidirectional electrode assembly having a structure in which positive electrode tabs and negative electrode tabs protrude in opposite directions. In the structure in which the second recess portion is located between one of the first-direction sealing portions and the first recess portion, the unidirectional electrode assembly, in which the electrode tabs are not oriented in the direction in which the second recess portion is formed but are oriented in the direction opposite thereto, is preferably used in consideration of the fact that the electrode tabs limit positioning of the second recess portion.

In the unidirectional electrode assembly, the second recess portion may be formed between the first-direction sealing portion oriented in the direction opposite to the direction in which the electrode tabs protrude and the first recess portion, and an additional second recess portion may be formed between the first-direction sealing portion oriented in the direction in which the electrode tabs protrude and the first recess portion. The additional second recess portion may be formed in a space between a positive electrode lead and a negative electrode lead extending outwards from the battery case so as not to overlap the positive electrode lead and the negative electrode lead.

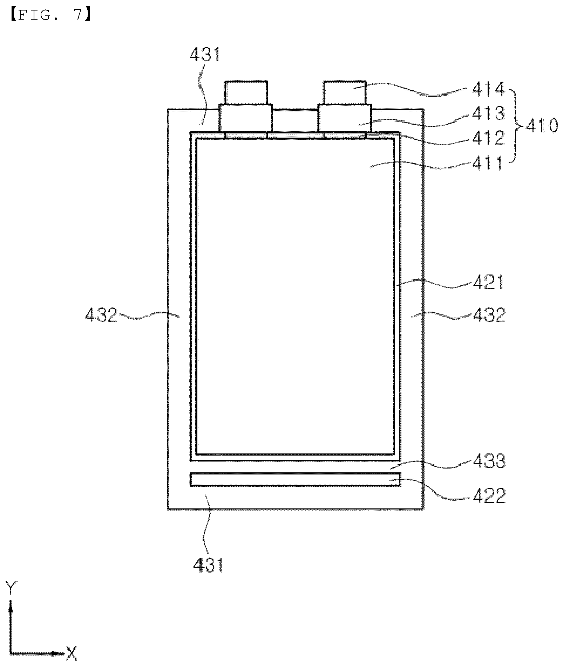

FIG. 7 is a plan view showing a pouch-type secondary battery configured to have a structure in which a second recess portion is located between a first-direction sealing portion and a first recess portion.

Referring to FIG. 7, the pouch-type secondary battery includes a first recess portion 421 configured to receive an electrode assembly 410 and a second recess portion 422 configured to receive a supplementary electrolytic solution.

In the electrode assembly 410, which is a unidirectional electrode assembly, electrode tabs 412 are formed at electrode plates 411 so as to protrude in one direction, and sealing tapes 413 are attached to the surfaces of electrode tabs 412 that are located at sealing portions of a battery case in order to increase sealing force.

Electrode leads 414 are coupled to outer ends of the electrode tabs 412, and the electrode leads 414 extend out of the battery case so as to function as electrode terminals.

First-direction sealing portions 431 are formed at a first-direction (x) edge of the battery case at which the protruding electrode tabs 412 are located and at an opposite-direction edge of the battery case, second-direction sealing portions 432 are formed at the left side and the right side in a second direction (y), which is perpendicular to the first-direction sealing portions 431, and the second recess 422 is formed between the first recess portion 421 and the first-direction sealing portion 431 located under the first recess portion 421.

A sealing line 433 is formed between the first recess portion 421 and the second recess portion 422, and the sealing line 433 is maintained in a sealing state in which sealing force of the sealing line is lower than sealing forces of the sealing portions located at the edges of the battery case.

When the battery case swells due to an increase in the inner pressure of the battery case, therefore, the sealing line 433 may be opened, whereby the supplementary electrolytic solution received in the second recess portion may move to the first recess portion.

In the case in which the second recess portion is located under the first recess portion, as in the pouch-type secondary battery of FIG. 7, the second-direction sealing portions of the battery case may be bent during an assembly process, whereby it is possible to obtain the effect of reducing the width of a battery cell. However, a problem in that the length of the electrode assembly becomes short as the result of the length of the first recess portion being shortened may occur. In order to solve this problem, an electrode assembly having a width larger than the width of the electrode assembly of FIGS. 1 and 2 may be applied.

In order to set the sealing force of the battery case so as to be uniform at all edges thereof, the widths of the first-direction sealing portions and the second-direction sealing portions, which are edge sealing portions of the battery case, may be set to be equal to each other. Also, in order to set the sealing force of the sealing line so as to be lower than the sealing force of the edges of the battery case, the width of the sealing line may be formed so as to be smaller than the widths of the first-direction sealing portions and the second-direction sealing portions.

A method of manufacturing a pouch-type secondary battery having the second recess portion located between a first-direction sealing portion and a first recess portion, as described above, may include (b-1) a step of forming a first recess portion and a second recess portion, (b-2) a first sealing step, (b-3) a second sealing step, (b-4) a step of injecting an electrolytic solution into the first recess portion and the second recess portion, and (b-5) a third sealing step, wherein the third sealing step may be performed in the sequence of performing third sealing for temporary sealing at a second-direction edge thereof after step (b-4), performing an activation process and a degassing process, performing fourth sealing at the second-direction edge thereof so as to be adjacent to the first recess portion and the second recess portion, and removing the temporarily sealed portion by cutting.

That is, in the present invention, the second recess portion configured to receive a supplementary electrolytic solution is also formed in the battery case at the time of forming the first recess portion configured to receive an electrode assembly in the battery case. Specifically, the first recess portion and the second recess portion are formed by locating a battery case sheet on a die having formed therein recesses having the same sizes as the first recess portion and the second recess portion and pressing the battery case sheet using punches.

The first sealing step and the second sealing step may be simultaneously performed.

In addition, step (b-5) may further include a process of bending the second-direction sealing portions

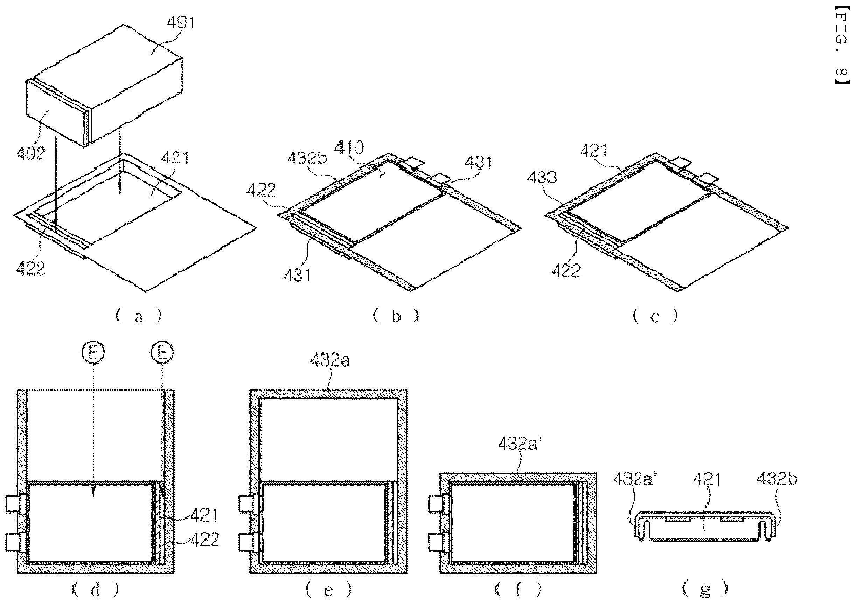

As an embodiment, a method of manufacturing the pouch-type secondary battery is shown in FIG. 8. For convenience of understanding, an upper case is omitted from the pouch-type secondary battery of FIG. 8.

Referring to FIG. 8, a battery case sheet is pressed using a first punch 491 and a second punch 492 to form a first recess portion 421 and a second recess portion 422 (step (a)).

An electrode assembly 410 is received in the first recess portion 421, and then first sealing to seal first-direction sealing portions 431 located at the upper side and the lower side of the first recess portion 421 and to seal a left second-direction sealing portion 432b, which is a second-direction sealing portion located at one side, is performed (step (b)).

Subsequently, second sealing to form a sealing line 433 between the first recess portion 421 and the second recess portion 422 is performed (step (c)).

The first sealing step and the second sealing step may be sequentially performed or may be simultaneously performed.

At the first sealing step, however, stronger coupling is achieved than at the second sealing step. Consequently, a sealing tool used at the first sealing step may be set so as to have larger contact area, higher temperature, or higher pressing force and longer pressing time.

Subsequently, an electrolytic solution E is injected into the first recess portion 421 and the second recess portion 422 (step (d)), third sealing to temporarily seal a right second-direction sealing portion 432a is performed (step (e)), and an activation process is performed. Specifically, injection of the electrolytic solution is performed through a predetermined portion for a second-direction sealing portion that has not been sealed at step (b), the right second-direction sealing portion 432a is temporarily sealed (step (e)) in order to perform an activation process after injection of the electrolytic solution, and an activation process is performed.

A degassing process is performed in order to remove gas generated during the activation process, fourth sealing to form a second-direction sealing portion 432a' so as to be adjacent to the first recess portion 421 and the second recess portion 422 is performed, and the temporarily sealed right second-direction sealing portion 432a is removed by cutting (step (f)).

In order to manufacture a compact battery cell by removing unnecessary width of the sealed pouch-type battery cell, the right second-direction sealing portion and the left second-direction sealing portion may be bent (step (g)). Even though the second-direction sealing portions are bent, as described above, movement of the supplementary electrolytic solution received in the second recess portion to the first recess portion is not inhibited when the sealing line is opened, since the first recess portion and the second recess portion are located in the same plane.

Those skilled in the art to which the present invention pertains will appreciate that various applications and modifications are possible based on the above description without departing from the scope of the present invention.

### (Description of Reference Symbols)

110, 210, 310, 410: Electrode assemblies
111, 411: Electrode plates
112, 412: Electrode tabs
113, 413: Sealing tapes
114, 414: Electrode leads
121, 221, 321, 421: First recess portions
122, 322, 422: Second recess portions
131, 231, 331, 431: First-direction sealing portions
132a, 132a', 232a, 332a, 332a', 432a, 432a': Right second-direction sealing portions
132b, 232b, 332b, 432b: Left second-direction sealing portions
133, 233a, 233b, 333, 433: Sealing lines
141: Upper case
142: Lower case
222a: Right second recess portion
222b: Left second recess portion
191, 391, 491: First punches
192, 392, 492: Second punches
432: Second-direction sealing portion
a1: Depth of first recess portion
a2: Depth of second recess portion
b1: Width of first recess portion
b2: Width of second recess portion
h1, h3, h5: First-direction lengths of first recess portions
h2, h4, h6: First-direction lengths of second recess portions
A: Upper space of second recess portion
x: First direction
y: Second direction

### [Industrial Applicability]

As is apparent from the above description, a pouch-type secondary battery according to the present invention is configured such that a second recess portion configured to receive a supplementary electrolytic solution is located at the edge of a first recess portion configured to receive an electrode assembly and such that the depth of the second recess portion has a size equal to or smaller than the depth of the first recess portion, whereby it is possible to prevent an increase in the overall thickness of the secondary battery even though the second recess portion is added.

When a battery module and a battery pack are configured using the pouch-type secondary battery, therefore, the number of battery cells is not reduced, whereby it is possible to prevent a decrease in capacity and a change in design is unnecessary.

In addition, since additional injection of an electrolytic solution is possible, it is possible to increase the lifespan of the battery and to prevent an increase in resistance due to exhaustion of the electrolytic solution.

In addition, it is possible to set a time at which a sealing line formed between the first recess portion and the second recess portion is opened, whereby it is possible to supplement an electrolytic solution at a desired time.

## Claims

1. A pouch-type secondary battery comprising:
an electrode assembly having a structure in which a separator is interposed between a positive electrode and a negative electrode; and
a battery case comprising a first recess portion configured to receive the electrode assembly and a second recess portion configured to receive a supplementary electrolytic solution, wherein
the second recess portion is located at at least one side of the first recess portion, and
a sealing line configured to prevent movement of the electrolytic solution received in the second recess portion is formed between the first recess portion and the second recess portion.

2. The pouch-type secondary battery according to claim 1, wherein a depth of the second recess portion has a size equal to or smaller than a depth of the first recess portion.

3. The pouch-type secondary battery according to claim 1, wherein the supplementary electrolytic solution moves to the first recess portion when the sealing line is opened.

4. The pouch-type secondary battery according to claim 1, wherein sealing states of edge sealing portions of the battery case are maintained when the sealing line is opened.

5. The pouch-type secondary battery according to claim 1, wherein
the battery case is provided at edges thereof with a first-direction sealing portion parallel to a first-direction edge of the battery case at which an electrode tab is located and a second-direction sealing portion perpendicular to the first-direction sealing portion, and
the second recess portion is located between the second-direction sealing portion and the first recess portion.

6. The pouch-type secondary battery according to claim 1, wherein
the battery case is provided at edges thereof with a first-direction sealing portion parallel to a first-direction edge of the battery case at which an electrode tab is located and a second-direction sealing portion perpendicular to the first-direction sealing portion, and
the second recess portion is located between the first-direction sealing portion and the first recess portion.

7. A method of manufacturing the pouch-type secondary battery according to claim 1, the method comprising:
a step of forming a first recess portion and a second recess portion in a battery case sheet using a first punch and a second punch;
a first sealing step of sealing first-direction sealing portions located at opposite sides and a second-direction sealing portion located at one side, except for a second-direction sealing portion located at the other side which is oriented in a direction in which an electrolytic solution is injected;
a step of injecting an electrolytic solution into the first recess portion;
a step of injecting an electrolytic solution into the second recess portion;
a second sealing step of forming a sealing line between the first recess portion and the second recess portion; and
a third sealing step of temporarily sealing the second-direction sealing portion at the other side which is oriented in the direction in which the electrolytic solution is injected.

8. The method according to claim 7, comprising:
(a-1) a step of forming a first recess portion and a second recess portion;
(a-2) a first sealing step;
(a-3) a step of injecting an electrolytic solution into the first recess portion;
(a-4) a third sealing step;
(a-5) a second sealing step; and
(a-6) a step of injecting an electrolytic solution into the second recess portion, wherein
a fourth sealing step of cutting a second-direction sealing portion temporarily sealed at the third sealing step, injecting an electrolytic solution into the second recess portion, and forming a second-direction sealing portion oriented in the direction in which the electrolytic solution is injected is performed after the second sealing step.

9. The method according to claim 7, comprising:
(b-1) a step of forming a first recess portion and a second recess portion;
(b-2) a first sealing step;
(b-3) a second sealing step;
(b-4) a step of injecting an electrolytic solution into the first recess portion and the second recess portion; and
(b-5) a third sealing step, wherein
the third sealing step comprises performing third sealing for temporary sealing after step (b-4), performing an activation process and a degassing process, performing fourth sealing so as to be adjacent to at least one of the first recess portion and the second recess portion, and removing the temporarily sealed portion by cutting.

10. The method according to claim 9, wherein the first sealing step and the second sealing step are simultaneously performed.

11. The method according to claim 9, wherein the second recess portion is located between the second-direction sealing portion and the first recess portion.

12. The method according to claim 11, wherein a second-direction length of the second recess portion is formed so as to be shorter than a second-direction length of the first recess portion.

13. The method according to claim 9, wherein the second recess portion is located between the first-direction sealing portion and the first recess portion.

14. The method according to claim 13, further comprising a process of bending the second-direction sealing portion.

15. A battery pack comprising pouch-type secondary batteries according to any one of claims 1 to 6, wherein the pouch-type secondary batteries are stacked in a state in which a second recess portion is disposed above a first recess portion such that a supplementary electrolytic solution in the second recess portion flows into the first recess portion.
